# EUROPÄISCHE PATENTSCHRIFT

(11) **EP 1 446 315 B1**
(45) Veröffentlichungstag und Bekanntmachung des Hinweises auf die Patenterteilung: **23.04.2008**
(21) Anmeldenummer: 02787773.7
(22) Anmeldetag: 22.11.2002
(51) Int. Cl.: B61H 7/08

(54) **VOLKSBELUSTIGUNGSVORRICHTUNG MIT SCHALTBARER WIRBELSTROMBREMSE**
POPULAR AMUSEMENT DEVICE WITH SWITCHABLE EDDY-CURRENT BRAKE
DISPOSITIF DE DIVERTISSEMENT POPULAIRE COMPORTANT DES MOYENS DE FREINAGE A COURANTS DE FOUCAULT DEBRAYABLES

(30) Priorität: 23.11.2001 DE 20119119 U
(43) Veröffentlichungstag der Anmeldung: 18.08.2004
(73) Patentinhaber: Rosner, Peter, 80339 München (DE)
(72) Erfinder: Rosner, Peter, 80339 München (DE)
(74) Vertreter: Prechtel, Jörg
(86) Internationale Anmeldenummer: PCT/EP2002/013135
(87) Internationale Veröffentlichungsnummer: WO 2003/043865

(56) Entgegenhaltungen:
- WO-A-96/32172
- DE-A- 2 924 225
- US-B1- 6 293 376

## Beschreibung

Die vorliegende Erfindung betrifft eine Volksbelustigungsvorrichtung gemäß dem Oberbegriff von Anspruch 1 sowie eine Magnetanordnung gemäß dem Oberbegriff von Anspruch 8.

Eine Volksbelustigungsvorrichtung ist aus der EP 0 820 333 B1 bekannt. Der Einsatz von Permanentmagneten in der Magnetanordnung ist aufgrund von Sicherheitsüberlegungen erwünscht, da im Gegensatz zu Elektromagneten das von Permanentmagneten ausgehende Magnetfeld von einer Stromversorgung unabhängig ist und so die Wirbelstrombremseinrichtung auch bei Stromaufall die gewünschte Bremskraft liefert. Ein Problem stellt jedoch die Veränderbarkeit bzw. Steuerbarkeit der Bremskraft einer Wirbelstrombremse mit Permanentmagneten dar.

In der genannten Druckschrift wird zur Schwächung bzw. Abschaltung der bei einer Wirbelstrombremse einer Volksbelustigungsvorrichtung zwischen Magnetanordnung und Induktionskörper wirkenden Bremskraft vorgeschlagen, die gesamte Magnetanordnung und den Induktionskörper von einander weg bzw. aufeinander zu zu bewegen. Dazu wird die gesamte Magnetanordnung oder/und der Induktionskörper beweglich an der sie jeweils tragenden Einrichtung angeordnet und mit einem Stellantrieb versehen.

Nachteilig an dieser Art der Veränderung einer Bremskraft einer Wirbelstrombremseinrichtung ist, dass sich die zwischen Magnetanordnung und Induktionskörper wirkende Bremskraft nur in groben Zügen, praktisch anwendbar nur zwischen einer vorbestimmten Bremsstellung mit verhältnismäßig großer Bremskraft und einer Null-Bremskraftstellung ohne bzw. mit verschwindend geringer Bremskraft einstellen läßt.

Darüber hinaus müssen dann, wenn die Magnetanordnung vom Induktionskörper weg bewegt wird, um den Überdeckungsgrad zwischen diesen beiden Teilen zu verringern, relativ große Massen bewegt werden, was zu verhältnismäßig langen Schaltzeiten führt, zu deren Verkürzung wiederum entsprechend leistungsfähige und teure Stellantriebe nötig sind.

Eine Volksbelustigung gemäß dem Oberbegriff von Anspruch 1 sowie eine Magnetanordnung gemäß dem Oberbegriff von Anspruch 8 sind in der Druckschrift DE-A-2924225 offenbart. Diese Volksbelustigungsvorrichtung weist eine Magnetanordnung einer Wirbelstrombremseinrichtung mit wenigstens zwei im Abstand voneinander angeordneten, relativ zueinander bewegbaren Teil-Magnetanordnungen auf. Die Teil-Magnetanordnungen umfassen jeweils Permanentmagnete und sind relativ zueinander verdrehbar oder verschiebbar, um die Bremskraft der Wirbelstrombremse einzustellen.

Eine weitere Volksbelustigungsvorrichtung bzw. zugehörige Magnetanordnung ist aus der WO 96/32172 bekannt, welche als nachstliegende Stand der Technik angesehen wird, und welche eine Wirbelstrombremse offenbart, bei welcher eine Magnetanordnung als Ganzes sowie ein Induktionskörper durch Verlagerung eines der beiden Teile außer oder in Bremseingriff miteinander gebracht werden können, um die Bremswirkung ein- bzw. auszuschalten. Im Beispiel eines Fallturms kann ein Magnetbauteil der Magnetanordnung durch Schwerkraft in eine Bremswirkungsstellung rückgestellt werden.

Zum fachlichen Hintergrund wird ergänzend noch auf die Druckschrift US-B1-6 293 376 verwiesen.

Aufgabe der vorliegenden Erfindung ist es, eine Volksbelustigungsvorrichtung sowie eine Magnetanordnung der eingangs genannten Art bereit zu stellen, bei welchen die zwischen Magnetanordnung und Induktionskörper wirkende Bremskraft möglichst schnell und genau und mit möglichst geringem Aufwand einstellbar ist und bei welchen die Abbremsung auch bei Ausfall einer Energieversorgung mit großer Sicherheit gewährleistet werden kann. Diese Aufgabe wird gelöst durch eine Volksbelustigungsvorrichtung gemäß Anspruch 1 bzw. durch eine Magnetanordnung gemäß Anspruch 8.

Der Ausdruck "Volksbelustigungsvorrichtung" bezeichnet dabei Fahrgeschäfte im weitesten Sinne, wie sie z. B. von Vergnügungsparks, Volksfesten und Jahrmärkten her bekannt sind. Dazu zählen beispielsweise Falltürme, Geisterbahnen, Achterbahnen usw.

Mit Bremsabschnitt ist ein, vorzugsweise zusammenhängender, Bereich der Führungsbahnanordnung bezeichnet, in dem zwischen Magnetanordnung und Induktionskörper eine wirbelstrombasierte Bremskraft wirken kann. Der Bremsabschnitt umfasst dabei mindestens den Längsabschnitt der Führungsbahn, in welchem eines der Teile: Magnetanordnung oder Induktionskörper, an dieser angeordnet ist. Die Bremsabschnitt-Führungsbahnrichtung ist dementsprechend die Richtung des Verlaufs der Führungsbahnanordnung im Bremsabschnitt.

Durch die Bewegbarkeit der Teil-Magnetanordnungen relativ zueinander mit daraus resultierender Änderung der Orientierung der Magnetfeldvektoren kann die Durchdringung des Induktionskörpers durch das von den Teil-Magnetanordnungen ausgehende Magnetfeld und somit das Ausmaß an im Induktionskörper hervorgerufenen Wirbelströmen, welche proportional zur wirksamen Bremskraft sind, schnell und genau eingestellt werden. Im Gegensatz zum Stand der Technik wird zur Veränderung der Bremskraft nicht mehr die gesamte Masse der Magnetanordnung, sondern nur noch ein Teil davon bewegt.

Eine konkrete Möglichkeit, die Erzeugung von Wirbelströmen im Induktionskörper zu beeinflussen liegt darin, den zur Bremsabschnitt-Führungsbahnrichtung orthogonalen Abstand zwischen den Teil-Magnetanordnungen durch ihre Bewegung relativ zueinander zu verändern. Dies kann beispielsweise dadurch geschehen, dass die Teil-Magnetanordnungen relativ zueinander um eine zur Bremsabschnitt-Führungsbahnrichtung im Wesentlichen parallele Achse verschwenkbar sind oder/und dass sie relativ zueinander im Wesentlichen orthogonal zur Bremsabschnitt-Führungsbahnrichtung linear verschiebbar sind. Dabei kann jedoch, je nach Ausführungsform, aufgrund von Streumagnetfeldern eine unter Umständen unerwünschte Restbremskraft verbleiben, die weiterhin zwischen Magnetanordnung und Induktionskörper wirkt.

Um diese Restbremskraft zu vermeiden und den Bereich der Veränderbarkeit der Bremskraft zu vergrößern wird die Volksbelustigungsvorrichtung derart ausgeführt, dass die Teil-Magnetanordnungen relativ zueinander mit einer im Wesentlichen in Bremsabschnitt-Führungsbahnrichtung weisenden Verschiebungskomponente linear verschiebbar sind. Dadurch bleibt der Abstand zwischen den Teil-Magnetanordnungen im Wesentlichen unverändert und es ändert sich lediglich die Relativstellung von Polen des wenigstens einen Permanentmagneten einer jeden von zwei im Wesentlichen in Gegenüberstellung angeordneten Teil-Magnetanordnungen zueinander. Diese Art der Bremskraftveränderung erfordert nur kurze Schaltwege zur Veränderung der Bremskraft.

"Im Wesentlichen in Gegenüberstellung" bedeutet dabei, dass sich die wenigstens zwei Teil-Magnetanordnungen dann, wenn sie in jeweils einer von zwei zueinander parallelen Ebenen liegen, bei einer Projektion der Magnetanordnung in Abstandsrichtung der parallelen Ebenen zumindest teilweise überdecken.

Zwar ist es grundsätzlich denkbar, dass jede Teil-Magnetanordnung jeweils nur einen Permanentmagneten aufweist. In einem Fall könnte ausgehend von einer Gegenüberstellung eines Pols des Permanentmagneten einer Teil-Magnetanordnung und eines ungleichnamigen Pols des Permanentmagneten der jeweils anderen Teil-Magnetanordnung durch eine lineare Verschiebung der Teil-Magnetanordnungen relativ zueinander die Bremskraft von einer Maximal-Bremskraft aus verringert werden. In einem anderen Fall könnte ausgehend von einer Gegenüberstellung von gleichnamigen Polen durch eine lineare Verschiebung der Teil-Magnetanordungen relativ zueinander die resultierende Bremskraft von einer Minimal-Bremskraft aus vergrößert werden.

Die resultierende Bremskraft kann dadurch erhöht werden, dass jede Teil-Magnetanordnung eine Mehrzahl von Permanentmagneten aufweist. Dabei kann ein zuvor angesprochener Schutz gegen Stromausfälle bestmöglich dadurch erhalten werden, dass die Magnetanordnung als Magnete ausschließlich Permanentmagnete aufweist. In diesem Fall kann auch bei plötzlichem totalem Energieausfall die Personenbeförderungsvorrichtung stets mit maximaler Bremskraft verzögert werden.

Bei einer besonders vorteilhaften Ausbildung einer erfindungsgemäßen Volksbelustigungsvorrichtung weist jede Teil-Magnetanordnung mehrere Permanentmagnete auf, die in Bremsabschnitt-Führungsbahnrichtung aufeinander folgend angeordnet sind. Dadurch können auch längere Bremsabschnitte realisiert werden, in denen eine verhältnismäßig hohe Bremkraft wirken kann, was wiederum eine vor dem jeweiligen Bremsabschnitt hohe zulässige Geschwindigkeit der Personenbeförderungsvorrichtung ermöglicht und somit die Attraktivität der Volksbelustigungsvorrichtung steigert. Die im Bremsabschnitt wirkende Bremskraft kann weiterhin dadurch erhöht werden, dass die Mehrzahl von Permanentmagneten einer jeden Teil-Magnetanordnung mit alternierender Polarität angeordnet sind. Dies bedeutet, dass an einer Fläche einer Teil-Magnetanordnung, welche zur jeweils anderen Teil-Magnetanordnung weist, in Bremsabschnitt-Führungsbahnrichtung ungleichnamige Pole aufeinander folgen.

Eine Erhöhung der Anzahl Polwechseln steigert zum einen die erreichbare maximale Bremskraft und verbessert zum anderen die Veränderbarkeit einer gewünschten zwischen Magnetanordnung und Induktionskörper wirkenden Bremskraft. Durch Verschieben der Teil-Magnetanordnungen relativ zueinander mit einer im Wesentlichen in Bremsabschnitt-Führungsbahnrichtung weisenden Verschiebungskomponente kann jede Bremskraft zwischen einer Maximal-Bremskraft und einer nahezu verschwindenden Minimal-Bremskraft eingestellt werden. In der diskutierten bevorzugten Ausführungsform ist die Bremsabschnitt-Führungsbahnrichtung gleich der Teil-Magnetanordnungs-Ersteckungsrichtung. Der benötigte maximale Verschiebeweg (Schaltweg) beträgt eine Polteilungslänge.

Die Maximal-Bremskraft wird dabei erreicht, wenn möglichst vielen Permanentmagnetpolen der einen Teil-Magnetanordnung ungleichnamige Permanentmagnetpole einer anderen Teil-Magnetanordnung gegenüber liegend angeordnet sind. In dieser Stellung ist bei der Abbremsung nämlich die Magnetfelddurchdringung des Induktionskörpers maximal. Die Minimal-Bremskraft wird analog dazu dann erhalten, wenn möglichst vielen Permanentmagnetpolen der einen Teil-Magnetanordnung gleichnamige Permanentmagnetpole einer anderen Teil-Magnetanordnung gegenüber liegend angeordnet sind, was zu einer minimalen Magnetfelddurchdringung des Induktionskörpers bei der Abbremsung führt.

Die Formulierung "möglichst viele" berücksichtigt dabei die Tatsache, dass selbst bei optimaler Ausbildung der Teil-Magnetanordnungen in einer der beiden Stellungen: Maximal-Bremskraftstellung oder Minimal-Bremskraftstellung, zumindest einem in Bremsabschnitt-Führungsbahnrichtung an einem Längsende einer Teil-Magnetanordnung liegenden Permanentmagnetpol kein Permanentmagnetpol einer anderen Teil-Magnetanordnung gegenüber liegt.

Eine flexible Veränderbarkeit der von der Wirbelstrombremseinrichtung erzeugten Bremskraft wird erfindungsgemäß dadurch erreicht, dass die Volksbelustigungsvorrichtung derart ausgebildet wird, dass die Teil-Magnetanordnungen relativ zueinander zwischen zwei Endstellungen verschiebbar sind, von denen die eine Endstellung näher bei einer Maximal-Bremskraftstellung liegt und mit dieser ggf. zusammenfällt und von denen die andere Endstellung näher bei der Minimal-Bremskraftstellung liegt und mit dieser ggf. zusammenfällt.

Je nach Anwendung können Magnetanordnungen und Induktionskörper in beliebiger Art und Weise auf Führungsbahnanordnung und Personenbeförderungsvorrichtung verteilt werden. Da in der Regel jedoch die Magnetanordnung eine größere Masse aufweist als der Induktionskörper und es bei zahlreichen Volksbelustigungsvorrichtungen auch auf eine möglichst große Beschleunigung der Fahrgäste ankommt, ist es vorteilhaft, wenn die Magnetanordnung an der Führungsbahnanordnung und der Induktionskörper an der Personenbeförderungsvorrichtung vorgesehen ist. Diese Verteilung der Wirbelstrombremseinrichtungsteile hat darüber hinaus den Vorteil, dass zum Antrieb der Personenbeförderungsvorrichtung ein Linearmotor eingesetzt werden kann, wobei der Induktionskörper einen Teil des Linearmotors bilden kann. Somit können zumindest Teile von Antrieb und Bremse gemeinsam genutzt werden, was die Gesamtanzahl benötigter Bauteile reduziert.

Bei Volksbelustigungsvorrichtungen spielt die Sicherheit der die jeweilige Vorrichtung benutzenden Fahrgäste verständlicherweise eine große Rolle. Die Unempfindlichkeit der erfindungsgemäßen Wirbelstrombremseinrichtung gegenüber Ausfällen einer Energieversorgung wurde bereits mehrfach betont. Zwar kann bei der Volksbelustigungsvorrichtung der vorliegenden Erfindung nicht das Magnetfeld der verwendeten Permanentmagnete unvorhergesehen ausfallen, jedoch ist es möglich, dass ein zur Erzeugung der Relativ-Bewegung zwischen den Teil-Magnetanordnungen verwendeter Stellantrieb versagt. Ein derartiger Stellantrieb kann beispielsweise eine hydraulisch oder pneumatisch betätigte Kolben-Zylinder-Einheit oder ein Elektromotor sein. Im Versagensfall des Stellantriebs kann man jedoch dann, wenn sich die Magnetanordnung nicht in der Maximal-Bremskraftstellung befindet, eine durch das Magnetfeld der Magnetanordnung verursachte, in Richtung einer Stellung höherer Bremskraft wirkende Rückstellkraft der Teil-Magnetanordnung ausnutzen. Dies liegt daran, dass die zuvor beschriebene Minimal-Bremskraftstellung eine Stellung labilen Gleichgewichts und die zuvor beschriebene Maximal-Bremskraftstellung eine Stellung stabilen Gleichgewichts der Teil-Magnetanordnungen zueinander ist.

Dieses Sicherheitsmerkmal der erfindungsgemäßen Volksbelustigungsvorrichtung wird erfindungsgemäß weiter dadurch verbessert, dass von den wenigstens zwei Teil-Magnetanordnungen eine erste starr mit der sie tragenden Einrichtung verbunden ist und eine zweite, im Wesentlichen orthogonal zur Bremsabschnitt-Führungsbahnrichtung mit Abstand von der ersten Angeordnete, mit der sie tragenden Einrichtung mit einer im Wesentlichen' in Bremsabschnitt-Führungsbahnrichtung weisenden Verschiebungskomponente linear verschiebbar verbunden ist, wobei mit der zweiten Teil-Magnetanordnung eine Verschiebungsbegrenzungsvorrichtung zusammen-wirkt, die eine Verschiebung der zweiten Teil-Magnetanordnung in einer vorgesehenen Relativ-Bewegungsrichtung des Induktionskörpers relativ zur Magnetanordnung über die zur Maximal-Bremskraftstellung nähere Endstellung hinaus verhindert und von dieser Endstellung aus entgegen der vorgesehen Relativ-Bewegungsrichtung gestattet. Somit wirkt zwischen den Teil-Magnetanordnungen nicht nur eine von der Magnetanordnung selbst bewirkte Rückstellkraft zu Stellungen größerer Bremskraft hin, sondern es kommt eine bei einer Abbremsung auf die Teil-Magnetanordnungen wirkende Bremsreaktionskraft als weitere Rückstellkraftkomponente hinzu.

Die vorgesehene Relativ-Bewegungsrichtung ist dabei die Richtung, in der der Induktionsköper relativ zur Magnetanordnung den Bremsabschnitt der Führungsbahnanordnung durchfährt. Die Verschiebungsbegrenzungsvorrichtung definiert eine Stellung mit verhältnismäßig hoher Bremskraft, gewünschtenfalls mit maximaler Bremskraft, in welche die Rückstellkraft die zweite Teil-Magnetanordnung zurückstellt und in welcher diese dann verharrt. Die Verschiebungsbegrenzungsvorrichtung kann in einfacher Weise durch einen mechanischen Anschlag gebildet sein.

Grundsätzlich ist es möglich, die wenigstens zwei Teil-Magnetanordnungen durch Vorsehen von Linearführungen an einer oder an beiden Teil-Magnetanordnungen relativ zueinander mit einer im Wesentlichen in Bremsabschnitt-Führungsbahnrichtung weisenden Verschiebungskomponentelinear verschiebbar anzuordnen. Eine besonders einfache und kostengünstige konstruktive Möglichkeit, die genannte lineare Verschiebbarkeit der wenigstens zwei Teil-Magnetanordnungen zueinander zu verwirklichen, liegt darin, wenigstens eine der wenigstens zwei Teil-Magnetanordnungen über ein Parallelogramm-Kurbelgetriebe mit einer anderen der wenigstens zwei Teil-Magnetanordnungen oder mit einem Gestell zu verbinden. Bei dieser Art der konstruktiven Ausgestaltung der Magnetanordnung weist die an das Parallelogramm-Kurbelgetriebe gekoppelte Teil-Magnetanordnung bei einer Relativbewegung bezüglich der anderen Teil-Magnetanordnung neben der in Bremsabschnitt-Führungsbahnrichtung weisenden Verschiebungskomponente eine orthogonal zu dieser gerichtete Verschiebungskomponente auf. Es werden an der verschieblichen Teil-Magnetanordnung lediglich Drehlager, wie z. B. Gleitlagerbuchsen oder Wälzlager benötigt.

Die vorliegende Erfindung wird im folgenden anhand der beiliegenden Zeichnungen beschrieben werden. Es stellt dar:
- Figur 1: eine Magnetanordnung einer Wirbelstrombremseinrichtung einer erfindungsgemäßen Volksbelustigungsvorrichtung in Maximal-Bremskraftstellung (durchgezogene Linie) und in Minimal-Bremskraftstellung (gestrichelte Linie),
- Figur 2: eine Ansicht in Richtung des Pfeils II von Figur 1 der in Figur 1 gezeigten Magnetanordnung in Maximal-Bremskraftstellung mit Induktionskörper,
- Figur 3: eine Schnittansicht der in Figur 1 gezeigten Magnetanordnung mit Induktionskörper in Maximal-Bremskraftstellung entlang der Linie III - III von Figur 1, und
- Figur 4: eine der Figur 2 entsprechende Ansicht der in Figur 1 gezeigten Magnetanordnung mit Induktionskörper in der Minimal-Bremskraftstellung.

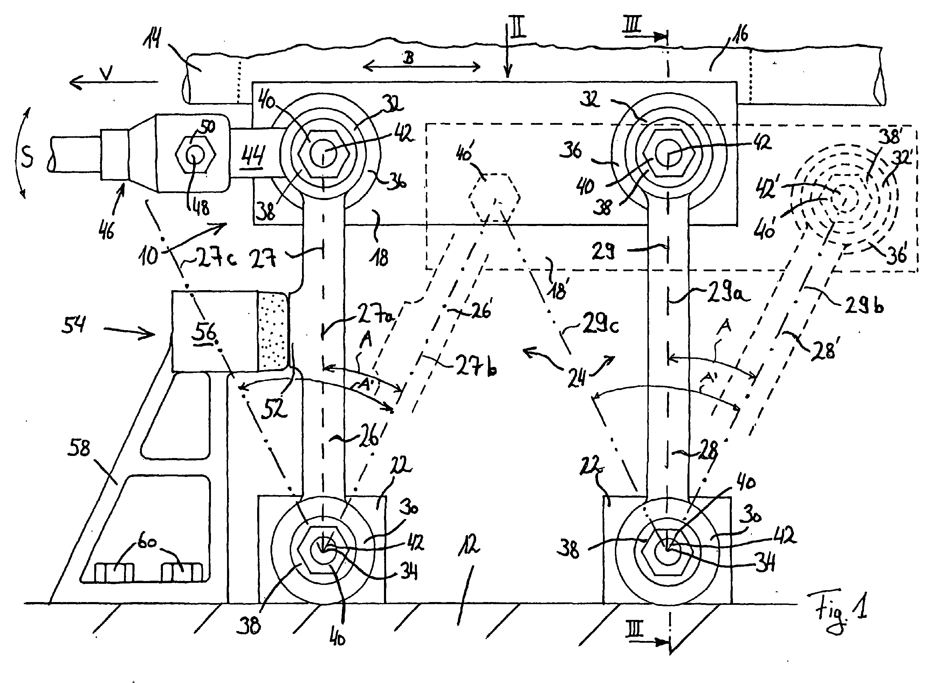

In Figur 1 ist eine Seitenansicht einer an einer Achterbahn angeordneten Magnetanordnung 10 dargestellt. Die Magnetanordnung 10 ist mit einem Gestell 12, das auch die Führungsbahnanordnung der Achterbahn, trägt, fest verbunden. Die Führungsbahnanordnung ist dabei aus einem Schienensystem 14 gebildet, das in Figur 1 nur schematisch angedeutet ist. Wagen von nicht dargestellten Achterbahnzügen verfahren längs dieses Schienensystems 14 in Richtung des Pfeils V.

Durch die Magnetanordnung 10 wird an dem Schienensystem 14 ein Bremsabschnitt 16 gebildet, der sich aufgrund des von der Magnetanordnung 10 ausgehenden Streufelds etwas über beide Längsenden der Magnetanordnung 10 hinaus erstreckt. Der wirksame Bereich des Bremsabschnitts 16 ist in Figur 1 durch punktierte Linien angezeigt. Die Bremsabschnitt-Führungsbahnrichtung ist dementsprechend die Erstreckungsrichtung des Schienensystems 14 innerhalb des Bremsabschnitts 16. Sie ist in Figur 1 durch den Doppelpfeil B gekennzeichnet.

Die Magnetanordnung 10 umfasst zwei als Magnetleisten 18 und 20 ausgebildete Teil-Magnetanordnungen. In Figur 1 ist nur die Magnetleiste 18 zu sehen, die Magnetleiste 20 wird von dieser verdeckt. Während die Magnetleiste 20 starr über die Magnetleistenträger 22 mit dem Gestell 12 der Führungsbahnanordnung verbunden ist, ist die Magnetleiste 18 relativ zur Magnetleiste 20 durch ein Parallelogramm-Kurbelgetriebe 24 mit wenigstens einer im Wesentlichen in Bremsabschnitt-Führungsbahnrichtung B weisenden Verschiebungskomponente verschiebbar. Genauer ist die Magnetleiste 18 bezüglich der Magnetleiste 20 in einer Ebene orthogonal zur Abstandsrichtung zwischen den Magnetleisten 18 und 20 verschiebbar. Mit Abstandsrichtung ist der Abstand von zwei parallelen Ebenen gemeint, in denen die Magnetleisten 18 und 20 jeweils liegen. Die Verschiebungsebene der Magnetleiste 18 sowie die Ebenen, in denen die Magnetleisten 18 und 20 liegen, sind parallel zur Zeichenebene der Figur 1.

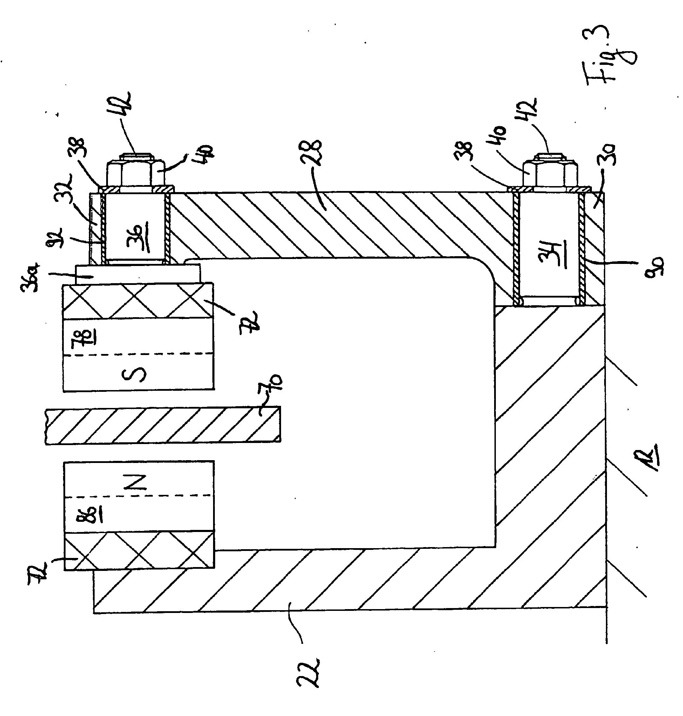

Das Parallelogramm-Kurbelgetriebe ist gebildet durch Lenker 26 und 28, an deren Längsenden jeweils eine gestellseitige Ringhülse 30 und eine magnetleistenseitige Ringhülse 32 ausgebildet ist. Die gestellseitige Ringhülse 30 umgibt ein (in Figur 1 nicht dargestelltes) Gleitlager, welches wiederum einen am Magnetleistenträger 22 angeordneten Bolzen 34 umgibt (siehe auch Figur 3). Um diesen Bolzen 34 sind die Lenker 26 und 28 drehbar.

Analog dazu umgeben die magnetleistenseitigen Ringhülsen 32 der Lenker 26 und 28 (in Figur 1 nicht dargestelle) Gleitlager, die wiederum an den Magnetleisten 18 und 20 Bolzen 36 umgeben. Die Ringhülsen 30 und 32 sind an den Bolzen 34 und 36 durch Unterlegscheiben 38 und Muttern 40 gesichert, die auf an den Bolzen ausgebildete Gewinde 42 aufgeschraubt sind.

Durch das Parallelogramm-Kurbelgetriebe 24 kann die Magnetleiste 18 in einem durch die Länge der Lenker 26 und 28 definierten Bereich in der oben beschriebenen Verschiebungsebene parallel verschoben werden, ohne seine Ausrichtung in Richtung der Bremsabschnitt-Führungsbahnrichtung B zu verändern. In Figur 1 ist in durchgezogener Linie die Maximal-Bremskraftstellung der Magnetleiste 18 und in gestrichelter Linie die Minimal-Bremskraftstellung der Magnetleiste 18 gezeigt. Die gestrichelte Darstellung in Figur 1 ist mit gleichen, jedoch apostrophierten Bezugszeichen gekennzeichnet.

An der magnetleistenseitigen Ringhülse 32 des Lenkers 26 ist ein in Verfahrrichtung V des Achterbahnzuges weisender Fortsatz 44 ausgebildet, der von einem gabelartigen Endteil 46 einer hydraulisch oder, bevorzugt, pneumatisch betätigten Kolben-Zylinder-Einheit umgriffen ist. Durch eine Schraube 48 und eine Mutter 50 ist das Endteil 46 derart am Fortsatz 44 befestigt, dass es bezüglich des Fortsatzes 44 einen Schwenkfreiheitsgrad in Richtung des Doppelpfeiles S besitzt. Durch Ausschieben der Kolbenstange der Kolben-Zylinder-Einheit kann die Magnetleiste 18 ausgehend von der in Figur 1 mit durchgezogener Linie gezeichneten Maximal-Bremskraftstellung entgegen der Verfahrrichtung V des Achterbahnzuges in eine beliebige Stellung niedrigerer Bremskraft bewegt werden. Selbstverständlich kann durch die Kolben-Zylinder-Einheit die Magnetleiste 18 aus einer beliebigen Stellung niedrigerer Bremskraft durch Einziehen der Kolbenstange zu einer Stellung höherer Bremskraft bzw. zur Maximal-Bremskraftstellung bewegt werden.

An dem Lenker 26 ist an dessen in Verfahrrichtung V weisender Seite eine Anschlagfläche 52 augebildet, die im dargestellten Fall in der Maximal-Bremskraftstellung an einem gestellfesten Anschlag 54 anliegt. Der gestellfeste Anschlag ist gebildet aus einem Dämpfungselementträger 56, der über ein Gestellfachwerk 58 und Schrauben 60 mit dem Gestell 12 der Führungsbahnanordnung fest verbunden ist. Zur Dämpfung des Auftreffimpulses des Lenkers 26 am gestellfesten Anschlag 54 ist am Dämpfungselementträger 56 zum Lenker 26 hinweisend ein Dämpfungselement 62 angeordnet.

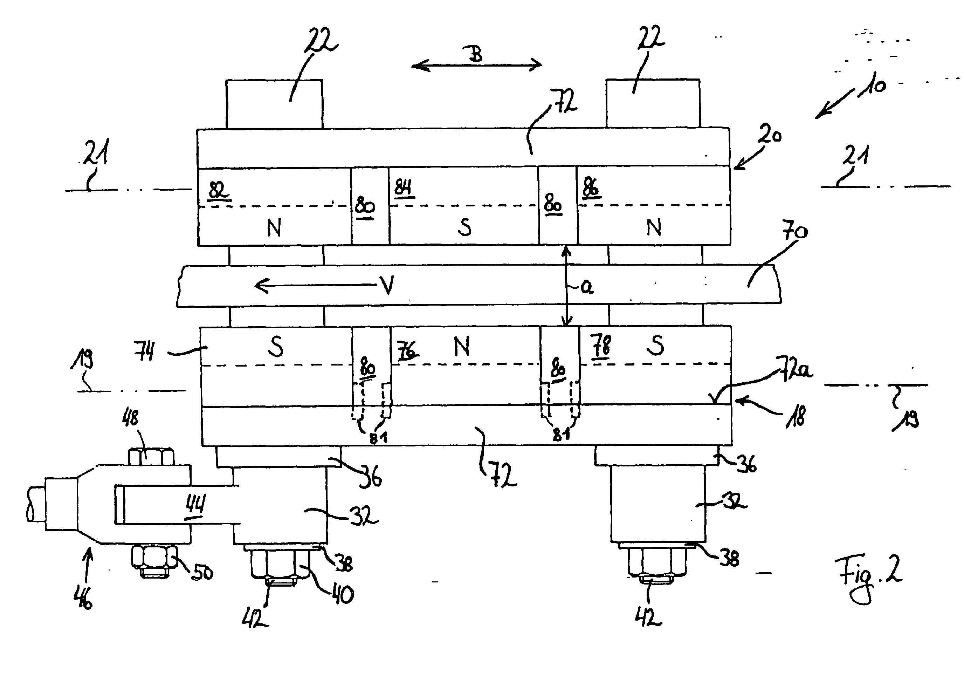

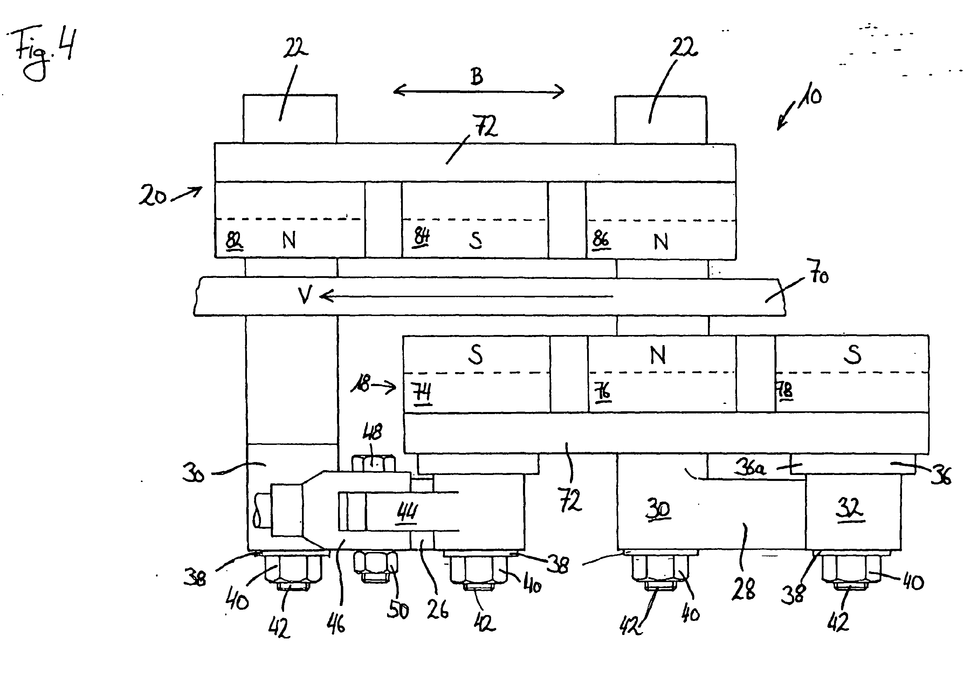

Aus der Maximal-Bremkraftstellung gemäß Figuren 1 und 2 kann die Magnetleiste 18 somit durch Unterdrucksetzen der pneumatischen KolbenZylinder-Einheit wahlweise in die in Figur 1 strichliert dargestellte Minimal-Bremkraftstellung gemäß Figur 4 verschoben werden oder, wahlweise, auch in gewünschte Zwischenstellungen zur Feindosierung der Bremskraft. Eine Rückbewegung bis in die Maximal-Bremskraftstellung wird durch entsprechende Reduzierung des pneumatischen Drucks in der Kolben-Zylinder-Einheit erzielt, ggf. durch Öffnen eines entsprechenden Belüftungsventils. Als Rückstellkraft dient die zwischen den beiden Magnetleisten 18 und 20 wirkenden Magnetkräfte, die solange in Verfahrrichtung V wirken, , bis die Nord- und Südpole der einzelnen Magnete der beiden Magnetleisten 18 und 20 jeweils ungleichnamigen Polen der anderen Leiste gegenüber liegen (= Maximal-Bremskraftstellung gemäß Figuren 1 und 2).

Als zusätzliche Sicherheitsmaßnahme können in nicht dargestellter Weise zwei parallelgeschaltete Entlüftungsventile mit der Kolben-Zylinder-Einheit verbunden sein, so dass bei Ausfall eines der beiden Ventile auf jeden Fall das andere Ventil die Rückstellung in die Maximal-Bremskraftstellung sicherstellt. Es reicht somit aus, dass die Kolben-Zylinder-Einheit lediglich einfachwirkend konzipiert ist.

In den Fällen, in denen nicht lediglich zwischen Null-Bremskraft und Maximal-Bremskraft umzuschalten ist, sondern es auf feinfühlige Bremskraftsteuerung bzw. Bremskraftregelung ankommt, kann auch eine doppeltwirkende Kolben-Zylinder-Einheit eingesetzt werden, bevorzugt mit hydraulischer Ansteuerung.

Wie in Figur 1 dargestellt, ist die Magnetleiste 18 zwischen den beiden Stellungen Maximal-Bremskraftstellung und Minimal-Bremskraftstellung bewegbar, wie durch jeweils einen Doppelpfeil A zwischen den entsprechenden Winkelstellungen 27a und 27b bzw. 29a und 29b einer Längsachse 27 des Lenkers 26 bzw. einer Längsachse 29 des Lenkers 28 symbolisiert ist. In der Winkelstellung 27a und 29a ist die Längsachse jeweils im Wesentlichen senkrecht zur Verfahrrichtung V (und zur Bremsabschnitt-Führungsbahnrichtung B).

Hiervon abweichen kann jedoch auch eine derartige Anordnung getroffen werden, bei der die Maximal-Bremskraftstellung spiegelsymmetrisch (bzgl. einer zur Verfahrrichtung V senkrechten Ebene) zur Minimal-Bremskraftistellung ist. Die entsprechende Winkelstellung 27c und 29c der Längsachse 27 bzw. 29 in der Maximal-Bremskraftstellung ist in Figur 1 mit einer Strich-Punkt-Punkt-Line angedeutet; der sich ergebende, doppelt so große Schwenkwinkelbereich ist jeweils durch einen Doppelpfeil A' symbolisiert. In entsprechender Weise ist auch die ortsfeste Magnetleiste 20 in den Figuren 1, 2 und 4 nach links verschoben, damit sich in der Maximal-Bremskraftstellung die gewünschte exakte Gegenüberstellung ungleichnamiger Magnetpole ergibt.

Die konstruktive Gestaltung der Magnetanordnung 10 in Verbindung mit dem gestellfesten Anschlag 54 und der Verstellung der Magnetleiste 18 entgegen der Verfahrrichtung V des Achterbahnzugs zu kleiner werdenden wirksamen Bremskräften hin stellt ein wesentliches Sicherheitsmerkmal dieser bevorzugten Ausführungsform dar. Auf die Magnetleiste 18 wirkende Bremsreaktionskräfte werden in der Maximal-Bremskraftstellung unmittelbar in den gestellfesten Anschlag 54 eingeleitet. Sollte sich die Magnetleiste 18 beim Bremsvorgang, auch welchen Gründen auch immer, noch nicht in ihrer Maximal-Bremskraftstellung befinden, so unterstützt die Bremsreaktionskraft die zwischen den Magnetleisten 18 und 20 wirkende magnetische Rückstellung in die stabile Endlage. Fährt nämlich zwischen die beiden Magnetleisten 18 und 20 der Induktionskörper 70 in Verfahrrichtung V hindurch, so wirkt auf ihn eine entgegen der Verfahrrichtung V wirkende Bremskraft. Dementsprechend wirkt auf jede der Magnetleisten eine in Verfahrrichtung V, d. h. entgegen der auf den Induktionskörper wirkenden Bremskraft, wirkende Bremsreaktionskraft. Diese vermag unter Umständen die Magnetleiste 18 bis zum Auftreffen auf den gestellfesten Anschlag 54 zurückzustellen, wo sie die Maximal-Bremskraftstellung erreicht und in dieser für die Dauer der Abbremsung verbleibt.

In Figur 2 ist eine Ansicht der in Figur 1 gezeigten Magnetanordnung aus Sicht des Pfeils II in Figur 1 gezeigt. Dabei ist im Gegensatz zu Figur 1 zwischen den Magnetleisten 18 und 20 ein Induktionskörper 70 dargestellt, der mit einem nicht dargestellten auf dem Schinensystem 14 verfahrenden Wagen fest verbunden ist. Der gestellfeste Anschlag 54 ist in Figur 2 der Übersichtlichkeit halber nicht gezeichnet. In Figur 2 ist die Maximal-Bremskraftstellung der Magnetanordnung 10 gezeigt.

Wie in Figur 2 zu sehen ist, sind die Magnetleisten 18 und 20 im Wesentlichen parallel zueinander mit einem zur Bremsabschnitt-Führungsbahnrichtung B im Wesentlichen orthogonalen Abstand a angeordnet. In dem gezeigten Ausführungsbeipiel liegt die Magnetleiste 18 in der Ebene 19 und die Magnetleiste 20 liegt in der zur Ebene 19 parallelen Ebene 21. Beide Ebenen 19 und 21 sind zur Zeichenebene der Figur 2 orthogonal. Der Abstand a ist dabei größer als die Breite des Induktionskörpers 70 in der Abstandsrichtung, um zwischen jeder Magnetleiste 18 und 20 und dem Induktionskörper 70 bei der Abbremsung einen Luftspalt zu belassen. Dieser Luftspalt ist unter anderem dazu nötig, um Materialreibung zwischen Induktionskörper und einer Magnetleiste 18 oder 20 zu verhindern. Weiterhin können bei der Abbremsung des Achterbahnzuges Querbewegungen des Induktionskörpers 70 auftreten. Der Luftspalt sollte daher so groß bemessen sein, dass diese Querbewegung ohne Berührung einer Magnetleiste möglich ist.

Die Magnetleisten 18 und 20 sind grundsätzlich gleich aufgebaut. Im folgenden wird lediglich die Magnetleiste 18 beschrieben, wobei diese Beschreibung ebenso für die Magnetleiste 20 gilt.

Die Magnetleiste 18 besteht aus einem Magnetträger 72, der vorzugsweise zur Erzeugung eines magnetischen Rückschlusses aus ferromagnetischen Material hergestellt ist. An der zur jeweils anderen Magnetleiste, in diesem Falle Magnetleiste 20, hin weisenden Fläche 72a sind beispielsweise drei Permanentmagnete 74, 76 und 78 befestigt. Sind höhere Bremskräfte gewünscht, so können auch mehr Permanentmagnete eingesetzt werden.

Im Fall einer Abbremsvorrichtung für einen Achterbahnzug werden im Allgemeinen 5-10 Magnete pro Magnetleiste eingesetzt. Die Befestigung der Permanentmagnete am jeweiligen Magnetträger erfolgt durch Vergießen mit Kunstharz. Die momentane Fixierung der Permanentmagnete vor dem Vergießen erfolgt durch Sicherungsstifte 81, die in entsprechende Bohrungen des jeweiligen Magnetträgers 72 eingesetzt sind und am Aussenumfang der Permanentmagnete anliegen. I

Die Permanentmagnete 74, 76 und 78 sind dabei derart an dem Magnetträger 72 befestigt, dass ein Pol eines jeden Permanentmagneten zum Magnetträger 72 und der jeweils andere Pol von dem Magnetträger 72 weg und zur anderen Magnetleiste hin weist. Zur Erhöhung der Bremskraft, die von der Magnetanordnung 10 und dem Induktionskörper 70 erreicht werden kann, sind die Permanentmagnete 74, 76 und 78 der Magnetleiste 18 in Bremsabschnitt-Führungsbahnrichtung B mit alternierender Polarität angeordnet, d. h. ein beliebiger Permanentmagnet der Magnetleiste 18 ist bezüglich eines in Bremsabschnitt-Führungsbahnrichtung benachbart liegenden Permanentmagneten um 180° um eine in Bremsabschnitt-Führungsbahnrichtung B orientierte Achse gedreht angeordnet.

Die Permanentmagnete 82, 84 und 86 des Magnetträgers 72 der Magnetleise 20 sind im Wesentlichen in gleicher Weise wie die Permanentmagnete 74, 76 und 78 jedoch mit zu diesen entgegengesetzter Polarität am Magnetträger 72 der Magnetleiste 20 angeordnet. In der in Figur 2 gezeigten Maximal-Bremskraftstellung der Magnetanordnung 10 einem Südpol des Permanentmagneten 74 der Magnetleiste 18 ein Nordpol des Permanentmagneten 82 der Magnetleiste 20 gegenüber. Entsprechendes gilt für die Permanentmagnetpaare 76 - 84 und 78 - 86.

Es sollte an dieser Stelle darauf hingewiesen werden, dass die Magnetleisten 18 und 20 in diesem Ausführungsbeispiel in ihrer Länge verkürzt dargestellt sind. Die Magnetleisten können in der Realität länger ausgeführt sein und mehr als drei Permanentmagnete aufweisen. Ebenso können mehr als zwei Lenker vorhanden sein

In Figur 3 ist eine Schnittansicht entlang der Linie III - III von Figur 1 gezeigt. Dabei ist vor allem die Konstruktion des Lenkers 28 zu erkennen.

Zwischen der Innenumfangswand der gestellseitigen Ringhülse 30 und dem Bolzen 34 ist als Gleitlager eine Gleithülse 90 angeordnet, die den Bolzen 34 umgibt. Die Gleithülse 90 wird dabei aus einem Material gewählt, das eine günstige Gleitpaarung mit dem Bolzen 34 bildet. Beispielsweise kann die Gleithülse 90 aus Bronze sein, wenn es sich bei dem Bolzen 34 um einen Stahlbolzen handelt. Der Bolzen 34 kann an dem Magnetleistenträger 22 angeschweißt sein.

In gleicher Weise wie die Drehlagerung am Bolzen 34 ist die Drehlagerung am Bolzen 36 mit der magnetleistenseitigen Ringhülse 32 ausgebildet. Auch die dort verwendete Gleithülse 92 sollte im Hinblick auf eine gute Gleitpaarung mit dem Bolzen 36 gewählt sein. Der Bolzen 36 ist über einen Flanschabschnitt 36a mit dem Magnetträger 72 verbunden, beispielsweise durch Verschrauben oder/und Verkleben.

In Figur 4 ist der Vollständigkeit halber eine der Figur 2 entsprechende Ansicht der Magnetanordnung 10 in Richtung des Pfeils II von Figur 1 in ihrer Minimal-Bremskraftstellung gezeigt.

In der in Figur 4 gezeigten Stellung steht nun dem Permanentmagneten 74 der Magnetleiste 18 der Permanentmagnet 80 der Magnetleiste 20 gegenüber, eine weitere Permanentmagnetpaarung wird aus den Magneten 76 und 78 gebildet. Dabei stehen sich nun gleichnamige Pole gegenüber, so dass der bei einer Abbremsung zwischen den Magnetleisten 18 und 20 in Verfahrrichtung V hindurch bewegte Induktionskörper kaum noch durch ein von den Magnetleisten 18 und 20 ausgehendes Magnetfeld durchdrungen wird. Lediglich von den sich an einem Längsende der Magnetleisten 18 und 20 befindenden Magnete 78 und 82 kann ein Streufeld ausgehen, dass den Induktionskörper 70 durchdringt und somit für eine geringe Abbremsung sorgt. Diese Restbremskraft tritt auf, weil den genannten Magneten kein gleichnamiger Pol eines anderen Magneten gegenüber liegt.

## Patentansprüche

1. Volksbelustigungsvorrichtung mit einer längs einer Führungsbahnanordnung (14) beweglichen Personenbeförderungsvorrichtung und einer eine Magnetanordnung (10) und einen Induktionskörper (70) umfassenden Wirbelstrombremseinrichtung (10, 70) zur wahlweisen Abbremsung der Personenbeförderungsvorrichtung,
wobei zur Ausbildung eines Bremsabschnitts (16) an der Führungsbahnanordnung' . (14) eines der Teile: Magnetanordnung (10) oder Induktionskörper (70), an der Führungsbahnanordnung (14) vorgesehen ist, während das jeweils andere Teil (10 oder 70) mit der Personenbeförderungsvorrichtung verbunden ist, und
wobei die Magnetanordnung (10) wenigstens zwei Teil-Magnetanordnungen (18, 20) mit jeweils wenigstens einem Permanentmagneten (74, 76, 78, 82, 84, 86) aufweist, welche Teil-Magnetanordnungen (18, 20) zumindest in einer ihrer Betriebsstellungen im Wesentlichen orthogonal zur Bremsabschnitt-Führungsbahnrichtung (B) mit Abstand (a) voneinander angeordnet sind, wobei der Induktionskörper (70) bei der Abbremsung zwischen den Teil-Magnetanordnungen (18, 20) angeordnet ist,
wobei die Teil-Magnetanordnungen (18, 20) relativ zueinander mit einer im Wesentlichen in Bremsabschnitt-Führungsbahnrichtung (B) weisenden Verschiebungskomponente linear zwischen zwei Endstellungen verschiebbar sind, von denen die eine Endstellung näher bei einer Maximal-Bremskraftstellung liegt und mit dieser ggf. zusammenfällt und von denen die andere Endstellung näher bei einer Minimal-Bremskraftstellung liegt und mit dieser ggf. zusammenfällt,
**dadurch gekennzeichnet, dass** von den wenigstens zwei Teil-Magnetanordnungen . (18, 20) eine erste (20) starr mit einer sie tragenden Einrichtung (12) verbunden ist und eine zweite (18) im Wesentlichen orthogonal zur Bremsabschnitt-Führungsbahnrichtung (B) mit Abstand (a) von der ersten (20) angeordnete, mit der sie tragenden Einrichtung (12) mit einer im Wesentlichen in Bremsabschnitt-Führungsbahnrichtung (B) weisenden Verschiebungskomponente linear verschiebbar verbunden ist,
wobei mit der zweiten Teil-Magnetanordnung (18) eine Verschiebungsbegrenzungsvorrichtung (54) zusammenwirkt, die eine Verschiebung der zweiten Teil-Magnetanordnung (18) in einer vorgesehenen Relativ-Bewegungsrichtung (V) des Indüktionskörpers (70) relativ zur Magnetanordnung (10) über die der Maximal-Bremskraftstellung näherliegende Endstellung hinaus verhindert und von dieser Endstellung aus entgegen der vorgesehen Relativ-Bewegungsrichtung (V) gestattet.

2. Volksbelustigungsvorrichtung nach einem der vorhergehenden Ansprüche,
**dadurch gekennzeichnet,**
**dass** jede Teil-Magnetanordnung (18, 20) eine Mehrzahl von Permanentmagneten (74, 76, 78, 82, 84, 86) aufweist.

3. Volksbelustigungsvorrichtung nach einem der vorhergehenden Ansprüche,
**dadurch gekennzeichnet,**
**dass** die Magnetanordnung (10) als Magnete (74, 76, 78, 82, 84, 86) ausschließlich Permanentmagnete (74, 76, 78, 82, 84, 86) aufweist.

4. Volksbelustigungsvorrichtung nach Anspruch 2 oder 3,
**dadurch gekennzeichnet,**
**dass** die Permanentmagnete (74, 76, 78, 82, 84, 86) einer jeden Teil-Magnetanordnung (18, 20) in Bremsabschnitt-Führungsbahnrichtung (B) aufeinander folgend, vorzugsweise mit alternierender Polarität, angeordnet sind.

5. Volksbelustigungsvorrichtung nach einem der vorhergehenden Ansprüche,
**dadurch gekennzeichnet,**
**dass** die Magnetanordnung (10) an der Führungsbahnanordnung (14) und der Induktionskörper (70) an der Personenbeförderungsvorrichtung vorgesehen ist.

6. Volksbelustigungsvorrichtung nach Anspruch 5,
**dadurch gekennzeichnet,**
**dass** sie weiterhin einen Linearmotor zum Antrieb der Personenbeförderungsvorrichtumg umfasst, wobei der Induktionskörper (70) einen Teil des Linearmotors bildet.

7. Volksbelustigungsvorrichtung nach einem der vorhergehenden Ansprüche,
**dadurch gekennzeichnet,**
**dass** die Verschiebungsbegrenzungsvorrichtung (54) durch einen mechanischen Anschlag (54) gebildet ist.

8. Magnetanordnung einer Wirbelstrombremseinrichtung, mit wenigstens zwei Teil-Magnetanordnungen (18, 20) von denen eine erste starr mit einem Gestell (12) verbunden ist und eine zweite, mit Abstand (a) von der ersten angeordnete Teil-Magnetanordnung (18), mit dem Gestell (12) relativ zur ersten Teil-Magnetanordnung (20) mit einer zu dem Abstand (a) im Wesentlichen orthogonalen Verschiebungskomponente zwischen zwei Endstellungen verschiebbar verbunden ist, von denen die eine Endstellung näher bei einer Maximal-Bremskraftstellung liegt und mit dieser ggf. zusammenfällt und von denen die andere Endstellung näher bei der Minimal-Bremskraftstellung liegt und mit dieser ggf. zusammenfällt,
**dadurch gekennzeichnet, dass** mit der zweiten Teil-Magnetanordnung (18) eine Verschiebungsbegrenzungsvorrichtung (54) zusammenwirkt, welche eine Verschiebung der zweiten Teil-Magnetanordnung (18) relativ zur ersten Teil-Magnetanordnung (20) über die der Maximal-Bremskraftstellung näherliegende Endstellung hinaus verhindert und von dieser Endstellung aus in der entgegengesetzten Richtung gestattet.

9. Magnetanordnung nach Anspruch 8,
**dadurch gekennzeichnet,**
**dass** die Verschiebungsbegrenzungsvorrichtung (54) durch einen mechanischen Anschlag (54) gebildet ist.

10. Magnetanordnung nach Anspruch 8 oder 9,
**dadurch gekennzeichnet,**
**dass** die zweite Teil-Magnetanordnung (18) der wenigstens zwei Teil-Magnetanordnungen (18, 20) über ein Parallelogramm-Kurbelgetriebe (24) mit dem Gestell (12) verbunden ist.

11. Magnetanordnung nach einem der Ansprüche 8 bis 10,
**dadurch gekennzeichnet,**
**dass** sie als Magnete (74, 76, 78, 82, 84, 86) ausschließlich Permanentmagnete (74, 76, 78, 82, 84, 86) aufweist.

12. Magnetanordnung nach Anspruch 11,
**dadurch gekennzeichnet,**
**dass** dass die Permanentmagnete (74, 76, 78, 82, 84, 86) einer jeden Teil-Magnetanordnung (18, 20) in einer zu dem Abstand (a) im Wesentlichen orthogonalen Richtung aufeinander folgend, vorzugsweise mit alternierender Polarität, angeordnet sind.

## Claims

1. Popular amusement device with a passenger transport device movable along a guide track arrangement (14) and an eddy current brake device (10, 70) comprising a magnet arrangement (10) and an induction body (70) for selective braking of the passenger transport device,
wherein, to form a braking section (16) at the guide track arrangement (14), one of the parts: magnet arrangement (10) or induction body (70), is provided at the guide track arrangement (14), while the respective other part (10 or 70) is connected to the passenger transport device, and
wherein the magnet arrangement (10) has at least two partial magnet arrangements (18, 20) in each case with at least one permanent magnet (74, 76, 78, 82, 84, 86), which partial magnet arrangements (18, 20) are arranged essentially orthogonally to the direction (B) of the braking section guide track at a distance (a) from one another at least in one of their operating positions, wherein the induction body (70) is arranged between the partial magnet arrangements (18, 20) during braking,
wherein the partial magnet arrangements (18, 20) are linearly displaceable relative to one another between two end positions with a displacement component pointing essentially in the direction (B) of the braking section guide track, one of the end positions lying closer to a maximum braking force position and optionally coinciding with this and the other of the end positions lying closer to a minimum braking force position and optionally coinciding with this,
**characterised in that**, of the at least two partial magnet arrangements (18, 20), a first (20) is rigidly connected to the device (12) supporting it and a second (18), arranged essentially orthogonally to the direction (B) of the braking section guide track at a distance (a) from the first (20), is connected to the device (12) supporting it such that it is linearly displaceable with a displacement component pointing essentially in the direction (B) of the braking section guide track,
wherein a displacement limiting device (54) co-operates with the second partial magnet arrangement (18), which device prevents displacement of the second partial magnet arrangement (18) in a specified movement direction (V) of the induction body (70) relative to the magnet arrangement (10) beyond the end position lying closer to the maximum braking force position and allows displacement out of this end position opposite to the specified relative movement direction (V).

2. Popular amusement device according to any one of the preceding Claims,
**characterised in**
**that** each partial magnet arrangement (18, 20) has a plurality of permanent magnets (74, 76, 78, 82, 84, 86).

3. Popular amusement device according to any one of the preceding Claims,
**characterised in**
**that** the magnet arrangement (10) has only permanent magnets (74, 76, 78, 82, 84, 86) as magnets (74, 76, 78, 82, 84, 86).

4. Popular amusement device according to Claim 2 or 3,
**characterised in**
**that** the permanent magnets (74, 76, 78, 82, 84, 86) of each partial magnet arrangement (18, 20) are arranged in succession in the direction (B) of the braking section guide track, preferably with alternating polarity.

5. Popular amusement device according to any one of the preceding Claims,
**characterised in**
**that** the magnet arrangement (10) is provided at the guide track arrangement (14) and the induction body (70) at the passenger transport device.

6. Popular amusement device according to Claim 5,
**characterised in**
**that** it also comprises a linear motor for driving the passenger transport device, wherein the induction body (70) forms a part of the linear motor.

7. Popular amusement device according to any one of the preceding Claims,
**characterised in**
**that** the displacement limiting device (54) is formed by a mechanical stop (54).

8. Magnet arrangement of an eddy-current brake device, with at least two partial magnet arrangements (18, 20), of which a first is rigidly connected to a frame (12) and a second partial magnet arrangement (18), arranged at a distance (a) from the first, is connected to the frame (12) so that it is linearly displaceable relative to the first partial magnet arrangement (20) between two end positions with a displacement component essentially orthogonal to the distance (a), one of the end positions lying closer to a maximum braking force position and optionally coinciding with this and the other of the end positions lying closer to a minimum braking force position and optionally coinciding with this,
**characterised in that** a displacement limiting device (54) co-operates with the second partial magnet arrangement (18), which device prevents displacement of the second partial magnet arrangement (18) relative to the first partial magnet arrangement (20) beyond the end position lying closer to the maximum braking force position and allows displacement out of this end position in the opposite direction.

9. Magnet arrangement according to Claim 8,
**characterised in**
**that** the displacement limiting device (54) is formed by a mechanical stop (54).

10. Magnet arrangement according to Claim 8 or 9,
**characterised in**
**that** the second partial magnet arrangement (18) of the at least two partial magnet arrangements (18, 20) is connected to the frame (12) via a parallelogram crank mechanism (24).

11. Magnet arrangement according to any one of Claims 8 to 10,
**characterised in**
**that** it has only permanent magnets (74, 76, 78, 82, 84, 86) as magnets (74, 76, 78, 82, 84, 86).

12. Magnet arrangement according to Claim 11,
**characterised in**
**that** the permanent magnets (74, 76, 78, 82, 84, 86) of each partial magnet arrangement (18, 20) are arranged in succession in a direction essentially orthogonal to the distance (a), preferably with alternating polarity.

## Revendications

1. Dispositif de divertissement populaire comprenant un dispositif d'acheminement de personnes mobile le long d'un agencement de bande de guidage (14) et un système de freinage à courants de Foucault (10, 70) comportant un agencement d'aimants (10) et un corps d'induction (70), destiné à freiner de manière sélective le dispositif d'acheminement de personnes, sachant que pour former une section de freinage (16) sur l'agencement de bande de guidage (14), une des parties : agencement d'aimants (10) ou corps d'induction (70), est prévue sur l'agencement de bande de guidage (14), tandis que l'autre partie (10 ou 70) respective est reliée au dispositif d'acheminement de personnes, et l'agencement d'aimants (10) comprenant au moins deux agencements partiels d'aimants (18, 20) dotés respectivement d'au moins un aimant permanent (74, 76, 78, 82, 84, 86), lesquels agencements partiels d'aimants (18, 20) étant disposés au moins dans une de leurs positions de fonctionnement sensiblement orthogonalement à la direction de bande de guidage de section de freinage (B) avec un écart (a) l'un par rapport à l'autre, le corps d'induction (70) étant disposé lors du freinage entre les agencements partiels d'aimant (18, 20),
les agencements partiels d'aimant (18, 20) étant mobiles l'un par rapport à l'autre de manière linéaire entre deux positions finales avec une composante de déplacement orientée sensiblement dans la direction de bande de guidage de section de freinage (B), positions parmi lesquelles une des positions finales se rapproche d'une position de force de freinage maximale et coïncide le cas échéant avec celle-ci et parmi lesquelles l'autre position finale se rapproche d'une position de force de freinage minimale et coïncide le cas échéant avec celle-ci, **caractérisé en ce que** parmi les au moins deux agencements partiels d'aimants (18, 20), un premier (20) est relié solidement à un système (12) les portant et un second (18) disposé à distance (a) du premier (20) est relié de façon linéairement mobile, sensiblement orthogonalement à la direction de guidage de section de freinage (B), au système (12) les portant avec une composante de déplacement orientée sensiblement dans la direction de guidage de section de freinage (B),
et dans lequel un dispositif de limitation de déplacement (54), empêchant un déplacement du second agencement partiel d'aimants (18) dans une direction prévue (V) de déplacement relative du corps d'induction (70) par rapport à l'agencement d'aimants (10) au-delà de la position finale se rapprochant de la position de force de freinage maximale et l'autorisant à partir de cette position dans le sens opposé à la direction de déplacement relatif (V) prévue, coopère avec le second agencement partiel d'aimants (18).

2. Dispositif de divertissement populaire selon la revendication précédente,
**caractérisé en ce que**
chaque agencement partiel d'aimants (18, 20) comprend une pluralité d'aimants permanents (74, 76, 78, 82, 84, 86).

3. Dispositif de divertissement populaire selon l'une quelconque des revendications précédentes,
**caractérisé en ce que**
l'agencement d'aimants (10) comprend comme aimants (74, 76, 78, 82, 84, 86) exclusivement des aimants permanents (74, 76, 78, 82, 84, 86).

4. Dispositif de divertissement populaire selon la revendication 2 ou 3,
**caractérisé en ce que**
les aimants permanents (74, 76, 78, 82, 84, 86) de chaque agencement partiel d'aimants (18, 20) sont disposés les uns à la suite des autres dans la direction de bande de guidage de section de freinage (B), de préférence avec une polarité alternée.

5. Dispositif de divertissement populaire selon l'une quelconque des revendications précédentes,
**caractérisé en ce que**
l'agencement d'aimants (10) est prévu sur l'agencement de bande de guidage (14) et le corps d'induction (70) sur le dispositif d'acheminement de personnes.

6. Dispositif de divertissement populaire selon la revendication 5,
**caractérisé en ce**
**qu'**il comprend en outre un moteur linéaire destiné à entraîner le dispositif d'acheminement de personnes, le corps d'induction (70) formant une partie du moteur linéaire.

7. Dispositif de divertissement populaire selon l'une quelconque des revendications précédentes,
**caractérisé en ce que**
le dispositif de limitation de déplacement (54) est formé par une butée mécanique (54).

8. Agencement d'aimants d'un système de freinage à courants de Foucault, comprenant au moins deux agencements partiels d'aimant (18, 20) parmi lesquels un premier est relié solidement à un bâti (12) et un second agencement d'aimants (18) disposé avec un écart (a) par rapport au premier est relié de manière mobile au bâti (12) entre deux positions finales par rapport au premier agent partiel d'aimants (20) avec une composante de déplacement sensiblement orthogonale à l'écart (a), parmi lesquelles une des positions finales se rapproche d'une position de force de freinage maximale et coïncide le cas échéant avec celle-ci et parmi lesquelles l'autre position finale se rapproche de la position de force de freinage minimale et coïncide le cas échéant avec celle-ci,
**caractérisé en ce qu'**un dispositif de limitation de déplacement (54), lequel empêche un déplacement du second agencement partiel d'aimants (18) par rapport au premier agencement partiel d'aimants (20) au-delà de la position finale se rapprochant de la position de force de freinage maximale et l'autorise à partir de cette position dans la direction opposée, coopère avec le second agencement partiel d'aimants (18).

9. Agencement d'aimants selon la revendication 8,
**caractérisé en ce que**
le dispositif de limitation de déplacement (54) est formé par une butée mécanique (54).

10. Agencement d'aimants selon la revendication 8 ou 9,
**caractérisé en ce que**
le second agencement partiel d'aimants (18) des au moins deux agencements partiels d'aimant (18, 20) est relié par une transmission à manivelle en parallélogramme (24) au bâti (12).

11. Agencement d'aimants selon l'une quelconque des revendications 8 à 10,
**caractérisé en ce**
**qu'**il comprend comme aimants (74, 76, 78, 82, 84, 86) exclusivement des aimants permanents (74, 76, 78, 82, 84, 86).

12. Agencement d'aimants selon la revendication 11,
**caractérisé en ce que**
les aimants permanents (74, 76, 78, 82, 84, 86) de chaque agencement partiel d'aimants (18, 20) sont disposés les uns à la suite des autres dans une direction sensiblement orthogonale à l'écart (a), de préférence avec une polarité alternée.
